# EUROPÄISCHE PATENTSCHRIFT

(11) **EP 0 634 768 B1**
(45) Veröffentlichungstag und Bekanntmachung des Hinweises auf die Patenterteilung: **01.10.1997**
(21) Anmeldenummer: 94111113.0
(22) Anmeldetag: 17.07.1994
(51) Int. Cl.: H01H 85/20, H01H 85/47, H02B 1/18

(54) **Sicherungselement für Stromschienensysteme**
Fuse element for a power rail system
Elément fusible pour un système à rails conducteurs

(30) Priorität: 17.07.1993 DE 9310753 U
(43) Veröffentlichungstag der Anmeldung: 18.01.1995
(73) Patentinhaber: Wöhner GmbH & Co. KG Elektrotechnische Systeme, 96472 Rödental (DE)
(72) Erfinder: Büttner, Alex, D-96472 Rödental (DE)
(74) Vertreter: Metzler, Jürgen, Dipl.-Ing.

(56) Entgegenhaltungen:
- EP-A- 0 331 383
- CH-A- 308 108
- CH-A- 381 751
- DE-A- 1 438 998
- DE-C- 3 940 154
- DE-U- 8 903 582
- FR-A- 1 337 709

## Beschreibung

Die Erfindung betrifft ein durch ein Gehäuse vollständig gekapseltes dreipoliges Sicherungselement zum direkten Aufsetzen auf Stromschienensysteme.

Aus der CH-A-30 81 08 ist ein Sicherungselement für Stromschienensysteme bekannt, bei dem sämtliche Klemmen der Abgangsleitungen im Bereich der unteren Stirnseite des Gehäuses auf einer Höhe liegen.

In der DE-A 14 38 998 ist ein Sicherungselement beschrieben, bei dem im oberen und unteren Gehäusebereich Lüftungsschlitze angeordnet sind, die einen Kühlluftstrom durch das Gehäuse als Folge einer Kaminwirkung erzeugen.

Durch ein Gehäuse vollständig gekapselte dreipolige Sicherungselemente zum direkten Aufsetzen auf Stromschienensysteme mit einem federnden Rasthebel zum formschlüssigen Verriegeln des Sicherungselementes mit einer der Stromschienen sind an sich bekannt.

Derartige Sicherungselemente zum Aufsetzen auf Stromschienen tragen die Sicherungen für die Leitungsabgänge, wobei durch die Abkapselungen weitgehende Sicherheit gegen Berühren der stromführenden Teile im Gegensatz zu nicht gekapselten Einrichtungen gegeben ist. Die Gefahr einer unbeabsichtigten Berührung besteht allerdings noch im Bereich der Abgangsklemmen, die den jeweiligen Leitungen und Stromschienen zugeordnet sind. Weiterhin besteht bei vollständig gekapselten Sicherungselementen dieser Art die Gefahr, daß sie sich im Dauerbetrieb und bei höheren Stromstärken in unzulässiger Weise aufheizen.

Der Erfindung liegt die Augabe zugrunde, ein Sicherungselement der eingangs genannten Art so zu verbessern, daß die Berührungssicherheit verbessert wird.

Diese Aufgabe wird erfindungsgemäß durch die im Patentanspruch 1 angegebenen Merkmale gelöst.

Weitere Ausgestaltungen des Sicherungselementes ergeben sich aus den Unteransprüchen.

Bei dem Sicherungselement nach der Erfindurg sind also sämtliche Abgangsklemmen im Bereich der unteren Gehäusestirnseite angeordnet und liegen auf einer Höhe, so daß ein leichtes Einführen der Abgangsleitungen möglich ist. Das Gehäuse des Sicherungselements weist sowohl im Bereich der oberen als auch im Bereich der unteren Stirnseite mehrere Lüftungsschlitze auf. Bei einer Erwärmung des Inneren des Sicherungselements strömt somit die erwärmte Luft aus den oberen Lüftungsschlitzen, während durch die Sogwirkung kühle Luft in die unteren Lüftungsschlitze eingesaugt wird. Durch diese Kaminwirkung wird also stets ein Kühlluftstrom an den zu kühlenden Teilen des Sicherungselements vorbeigeführt, der eine unzulässige Erwärmung mit Sicherheit vermeidet. Die Abgangsklemmen sind als Kastenklemmen ausgebildet und weisen von vorne zugängliche Feststellschrauben auf, die mit ihren Schraubenköpfen berührungssicher vertieft im Gehäuse angeordnet sind. Zum formschlüssigen Verrasten des Sicherungselements an den Stromschienen ist im Bereich der oberen Stirnseite des Gehäuses ein federnd in der Verriegelungsstellung gehaltener Rasthebel vorgesehen, der einen in eine kanalartige Vertiefung der oberen Stirnseite hineinragenden, von vorne her betätigbaren Lösearm aufweist. Zur weiteren Erhöhung der Berührungssicherheit ist zur Abdeckung der Feststellschrauben der Abgangsklemmen im Bereich der unteren Gehäusestirnseite eine verschwenkbare Abdeckklappe angeordnet. Eine weitere Abdeckklappe ist im Bereich der oberen Gehäusestirnseite vorgesehen, die die kanalartige Vertiefung für den Lösearm im geschlossenen Zustand abdeckt. Diese Abdeckklappe ragt im geschlossenen Zustand über die obere Stirnseite des Gehäuses hinaus und deckt den zum Abschieben des Sicherungselements benötigten Zwischenraum ab, so daß ein Abziehen des Elements bei geschlossener oberer Abdeckklappe verhindert wird, wodurch zusätzlich zum Rasthebel ein unbeabsichtigtes Abnehmen des Sicherungselements von den Stromschienen unmöglich ist. Die Abdeckklappen, die als Zubehör zusätzlich am Gehäuse angebracht werden können, sind so gelagert, daß sie beim Verschwenken in die Offen- oder Schließstellung jeweils in diese Stellungen schnappen und in diesen Stellungen federnd gehalten werden. Zu diesem Zweck bestehen die Schwenkachsen der Abdeckklappen aus zwei an der Abdeckklappe angeordneten, koaxial mit ihr ausgerichteten Vorsprüngen, die in entsprechende Vertiefungen des Gegenlagers am Gehäuse eingreifen. Diese Vorsprünge sind jeweils pyramidenförmig gestaltet, während die Vertiefungen ebenfalls korrespondierend pyramidenförmig ausgebildet sind, so daß jeweils zwei bestimmte Schnappstellungen, die offene und die geschlossene Position, der Abdeckklappen erhalten werden. Die Vorsprünge an der Abdeckklappe können auch kegelförmig gestaltet sein und in entsprechende kegelförmige Vertiefungen der Gegenlager am Gehäuse eingreifen. Bei dieser Gestaltung der Lagerung sind am Gehäuse zwei im rechten Winkel entsprechend der Offen- und Schließstellung zueinander stehende Flächen angeordnet, an denen die Unterkante der jeweiligen Abdeckklappe in der geschlossenen oder in der geöffneten Position anliegt, während in den Zwischenstellungen durch die vergrößerte Anlagekraft der Unterkante der Abdeckklappen an diesen Flächen bzw. der dazwischen liegenden Übergangsfläche eine die Abdeckklappen in die eine oder andere Richtung verschwenkende Schnappkraft entsteht. Weiterhin weisen die Aufsteckfüße des Sicherungselements abbrechbare leistenförmige Vorsprünge auf, so daß ein Anpassen der Steckfüße an verschiedene Stromschienendicken möglich ist. Insgesamt zeigt sich, daß das Sicherungselement vielseitig einsetzbar ist und größtmöglichen Berührungsschutz bietet.

Die Erfindung wird nun anhand von Ausführungsbeispielen im Zusammenhang mit der Zeichnung näher erläutert. Es zeigen:
- Fig. 1: eine perspektivische Darstellung des Sicherungselements mit eingesetzten Abdeckklappen in geöffneter Stellung,
- Fig. 2: das Sicherungselement mit Abdeckklappen in der Schließstellung,
- Fig. 3: eine seitliche Ansicht des cherungselements, z.T. brochen, mit fehlenden Abdeckklappen,
- Fig. 4: einen Aufsteckfuß des rungselements in perspektivischer abgebrochener Darstellung,
- Fig. 5: eine Draufsicht auf die Abdeckklappe,
- Fig. 6: eine Ansicht der Lagerungsstelle für eine Abdeckklappe am Gehäuse des Sicherungselements,
- Fig. 7: eine der Abdeckklappen mit gern am Gehäuse in perspektivischer Darstellung vor dem setzen der Abdeckklappe,
- Fig. 8: einen Schnitt durch die Abdeckklappe gemäß Schnittlinie VIII-VIII in Fig. 7,
- Fig. 9: eine seitliche Ansicht der Lagerstelle am Gehäuse,
- Fig. 10: eine perspektivische Ansicht einer weiteren Ausführungsform einer Abdeckklappe mit Lagerung,
- Fig. 11: einen Schnitt durch die Abdeckklappe gemäß Schnitt XI-XI in Fig. 10 und
- Fig. 12: eine seitliche Ansicht der Lagerungsstelle am Gehäuse.

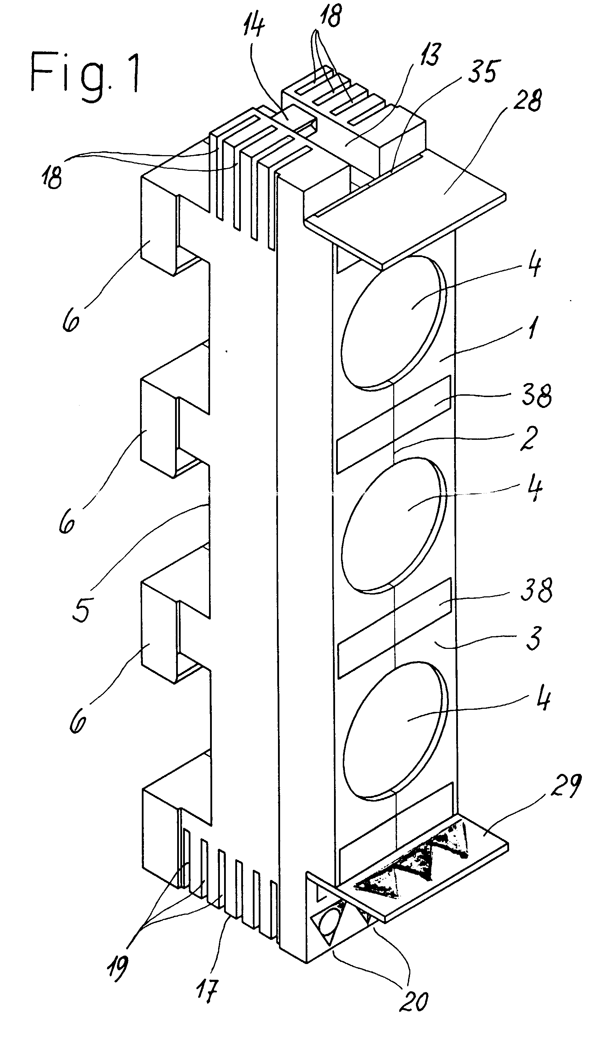

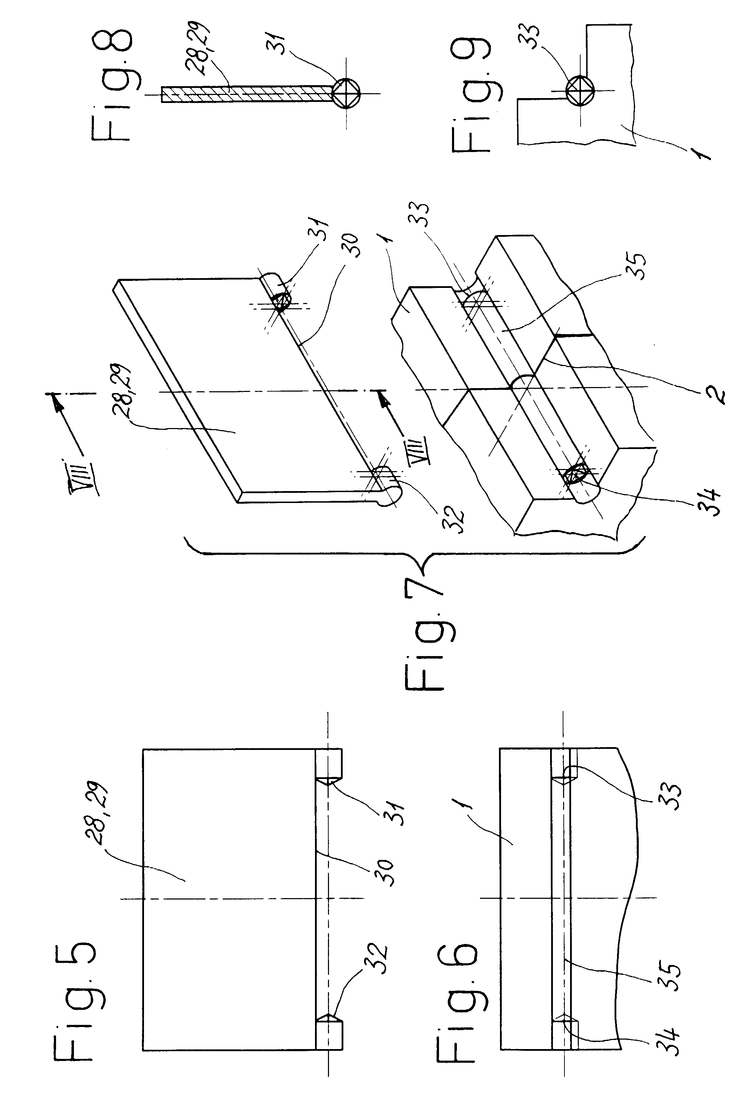

Das in den Fig. 1 bis 3 gezeigte dreipolige Sicherungselement zum Aufsetzen auf Stromschienen ist durch ein Gehäuse 1 vollständig gekapselt und berührungssicher abgedeckt. Das Gehäuse 1 ist zweiteilig ausgebildet (Trennfuge 2); mittels (nicht gezeigter) Nieten, Schrauben od. dgl. werden die Gehäuseteile zusammengehalten. Das Gehäuse 1 besteht aus einem geeigneten, elektrisch isolierenden Kunststoff. An der Vorderseite 3 des Gehäuses 1 sind die Öffnungen 4 für die nicht gezeigten Sicherungen zu erkennen, während an der Rückseite 5 des Gehäuses 1 Aufsteckfüße 6 angeordnet sind, die das Sicherungselement nach dem Aufstecken auf die Stromschienen an diesen halten. Die Aufsteckfüße 6 sind, wie auch in Fig. 4 zu erkennen ist, mit leistenartigen Vorsprüngen 7 ausgestattet, die abbrechbar sind, so daß das Sicherungselement auf Sammelstromschienen verschiedener Dicke aufsetzbar ist . Nach dem Aufsetzen des Sicherungselements auf die Stromschienen wird dieses mit den Stromschienen verrastet. Zu diesem Zweck ist im oberen Bereich des Gehäuses 1, in der Nähe der oberen Stirnseite 8, ein verschwenkbarer Rasthebel 9 angeordnet, der unter der Wirkung einer einstückig mit ihm ausgebildeten Feder 10 in die Raststellung gedrückt wird. Am Rasthebel 9 sind im Bereich der Kontaktfläche mit der oberen Stromschiene mehrere Raststufen 11 angeordnet, so daß bei unterschiedlichen Stromschienenbreiten eine sichere formschlüssige Verrastung zwischen Rasthebel 9 und der zugehörigen oberen Stromschiene möglich ist. Der Rasthebel 9 ist zweiarmig ausgebildet. Der hierdurch gebildete Lösearm 12 ragt in eine kanalartige Vertiefung bzw. Aussparung 13 der oberen Stirnseite 8 hinein und weist eine Abwinklung 14 mit Einkerbung 15 auf, in die ein entsprechendes Werkzeug, z.B. Schraubendreher 16, eingesetzt werden kann, um den Rasthebel 9 in die Lösestellung zu verschwenken, so daß das Sicherungselement von den Stromschienen abgenommen werden kann.

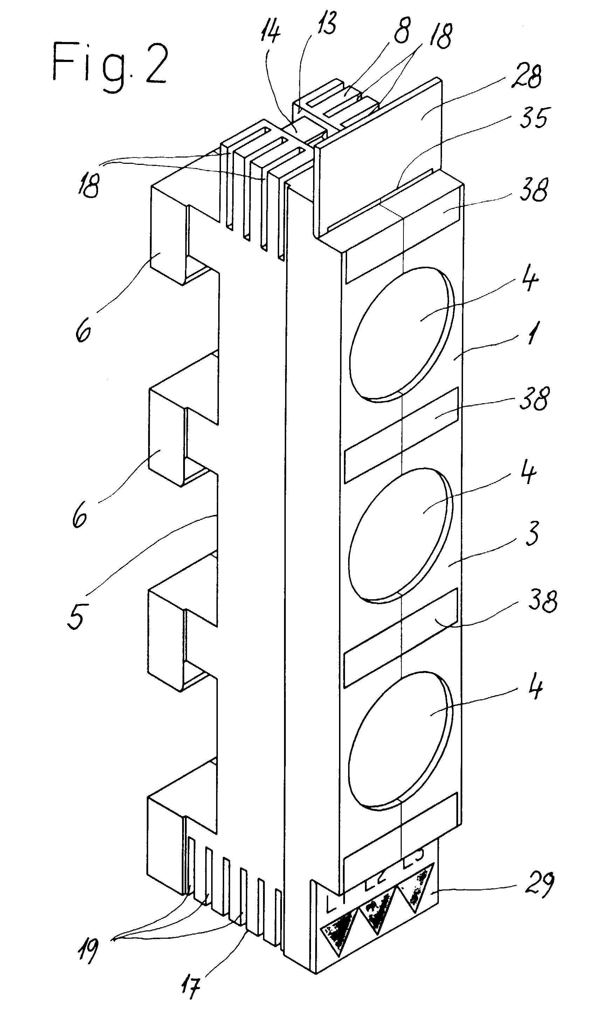

Wie aus den Fig. 1 und 2 zu ersehen ist, sind sowohl an der oberen Stirnseite 8 als auch im Bereich der unteren Stirnseite 17 Lüftungsschlitze 18 und 19 angeordnet, die ein Stück in die Seitenflächen des Gehäuses 1 hin verlaufen. Hierdurch wird kühle Umgebungsluft in die unteren Lüftungsschlitze 19 eingesaugt, strömt an den zu kühlenden Innenteilen des Sicherungselements vorbei und gelangt über die oberen Lüftungsschlitze 18 wieder nach außen. Durch die Kaminwirkung wird somit bei einer Erwärmung der Innenteile des Sicherungselements ein dauernder Kühlluftstrom erzeugt, der eine übermäßige Erwärmung des Sicherungselements wirksam verhindert.

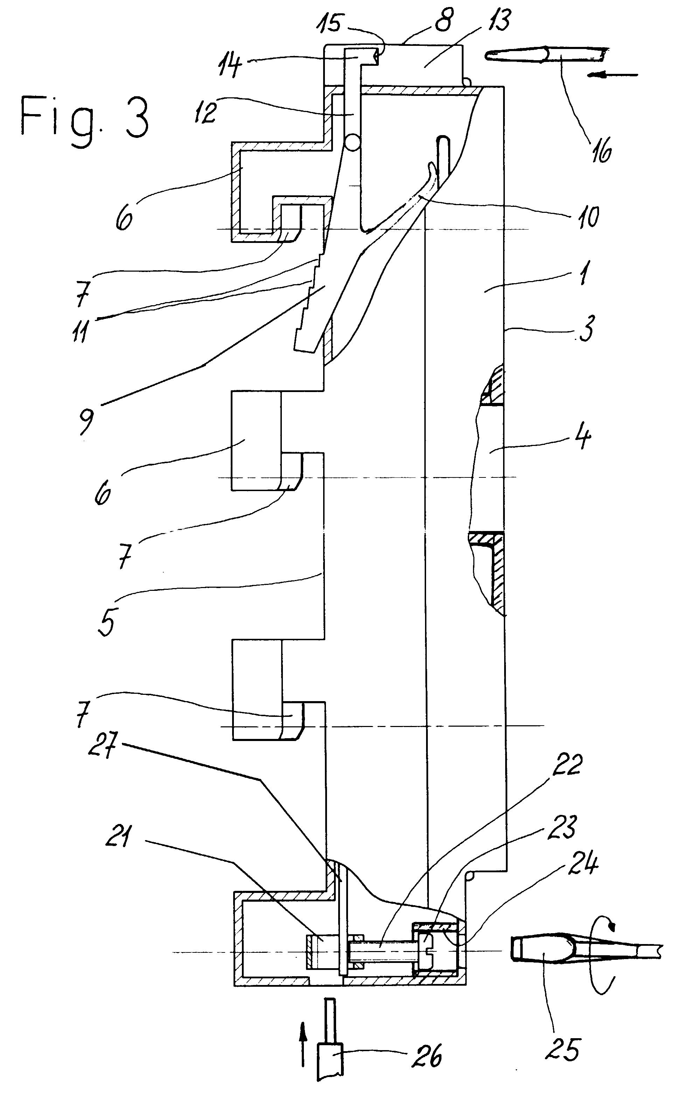

Die Leitungsabgänge 20, bei der dreipoligen Ausführung insgesamt drei, sind sämtlich im Bereich der unteren Stirnseite 17 auf derselben Höhe liegend angeordnet. Dabei sind die Abgangsklemmen als Kastenklemmen 21 ausgebildet, die mit Klemm- oder Feststellschrauben 22 in Verbindung stehen. Die Schraubenköpfe 23 der Klemmschrauben 22 sind in das Gehäuse 1 vertieft eingesetzt, so daß sie von außen mit dem Finger nicht erreicht werden können. Wie in Fig. 3 zu erkennen ist, sind hierbei im Bereich der Vorderseite 3 des Gehäuses 1 Schächte 24 zur Aufnahme der Schraubenköpfe 23 vorgesehen, in die ein Schraubendreher 25 od. dgl. einführbar ist, so daß die Kastenklemmen 21 nach dem Einführen des jeweiligen Abgangsleiters 26 mit diesem durch entsprechendes Festdrehen der Schrauben 22 festgeklemmt werden und guten elektrischen Kontakt mit der jeweiligen Kontaktschiene 27 besitzen.

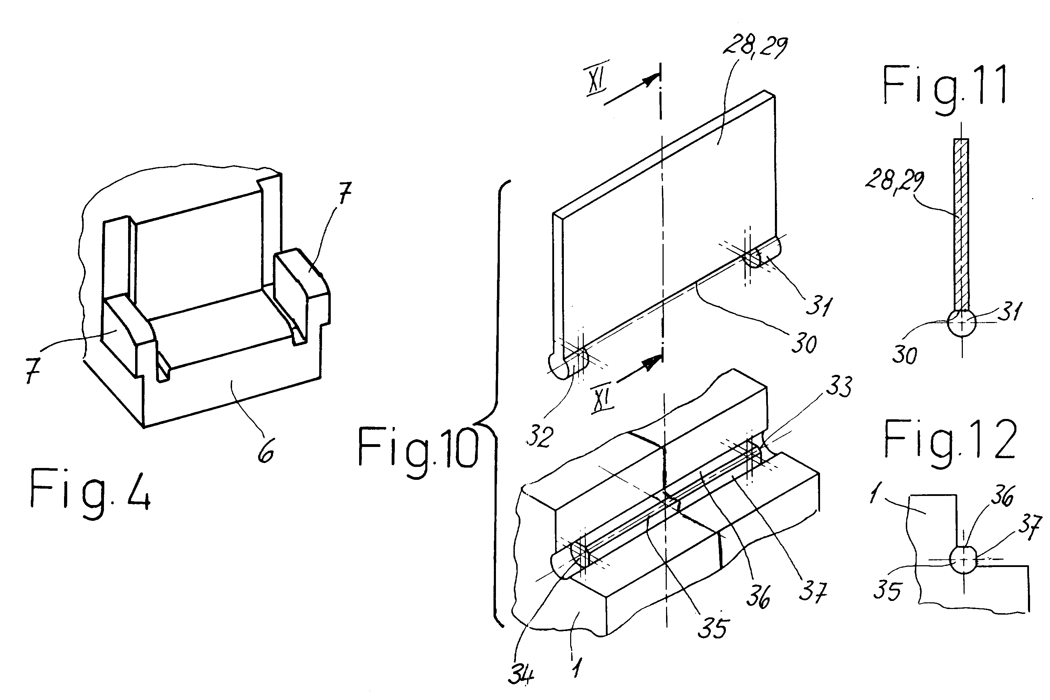

Eine weitere Verbesserung der Berührungssicherheit wird durch die Anordnung von Abdeckklappen 28 und 29 im Bereich der oberen und unteren Stirnseite 8 und 17 erreicht. In der Schließstellung, wie in Fig. 2 gezeigt, sind die Schraubenköpfe 23 der Kastenklemmen 21 durch die Abdeckklappe 29 und die Abwinklung 14 des Lösearms 12 durch die Abdeckklappe 28, die die kanalartige Vertiefung 13 verschließt, von vorne vollständig abgedeckt. Dabei schließt die untere Abdeckklappe 29 bündig mit der unteren Stirnseite 17 ab. Die obere Abdeckklappe 28 hingegen ragt über die obere Stirnseite 8 des Gehäuses 1 hinaus, und zwar so weit, daß der zum Abschieben des Sicherungselements von den Stromschienen erforderliche Zwischenraum abgedeckt ist, so daß ein unbeabsichtigtes Abschieben des Elements nicht nur durch den Rasthebel 9, sondern zusätzlich durch die obere Abdeckklappe 28 wirksam verhindert wird. Auf der unteren Abdeckklappe 29 können im übrigen noch Pfeile oder dgl. aufgebracht sein, die die Stromflußrichtung angeben. Im aufgeklappten Zustand der Abdeckklappen 28 und 29 sind die Schraubenköpfe 23 wie auch die Abwinklung 14 des Lösearms 12 mit den entsprechenden Werkzeugen frei zugänglich. Die Abdeckklappen 28 und 29 halten ihre jeweilige Schließ- oder Öffnungsposition selbsttätig ein. Dies wird durch eine entsprechende Lagerung der Abdeckklappen 28, 29 am Gehäuse erreicht, wodurch eine Schnappwirkung in die beiden Endpositionen erreicht wird. Wie in Fig. 5 zu erkennen ist, sind an der Unterkante 30 der Abdeckklappe 28 bzw. 29 in koaxialer Ausrichtung zwei aufeinanderzuweisende zapfenartige Vorsprünge 31, 32 angeordnet, die in entsprechende Vertiefungen 33, 34 der einstückig mit dem Gehäuse 1 ausgebildeten Lagerachse 35 eingreifen. Da die Abdeckklappen 28, 29 aus federndem Kunststoff bestehen, können sie ohne Schwierigkeiten nachträglich auf das Gehäuse 1 aufgesetzt werden. In Fig. 7 bis 9 ist deutlich zu ersehen, daß die Vorsprünge 31, 32 der Abdeckklappen 28, 29 pyramidenförmig gestaltet sind, die in die entsprechend pyramidenförmig gestalteten Vertiefungen 33, 34 eingreifen. Durch diese pyramidenförmige Ausbildung werden die Klappen 28, 29 in der Schließ- bzw. Offenstellung, also senkrecht oder waagerecht, gehalten, wenn die Kanten der Pyramiden in Übereinstimmung zueinander liegen. Beim Verschwenken der Klappen 28, 29 werden diese gespreizt und wirken somit als Feder, die bestrebt ist, die Klappen jeweils wieder in die stabile Position (Schließ- oder Offenstellung) zu bringen. Bei der Ausführungsform der Abdeckklappen 28, 29 und der zugehörigen Gehäuselagerung gemäß Fig. 10 bis 12 wird die Schnappwirkung bzw. stabile Feststellung der Abdeckklappen in der geschlossenen und der geöffneten Stellung durch zwei rechtwinklig zueinander stehende Abflachungen 36 und 37 der Schwenkachse 35 erreicht. Dabei ist die Abflachung 36 waagerecht und die Abflachung 37 senkrecht ausgerichtet. Die Unterkante 30 der Abdeckklappe 28 bzw. 29 liegt jeweils an diesen Abflachungen in der Schließ- oder Offenlage an. Beim Verschwenken der Klappen 28, 29 werden die Spitzen der Vorsprünge 31 und 32, die hier kegelig ausgebildet sind und in die entsprechend kegelig ausgebildete Vertiefungen 33 und 34 der Lagerachse 35 eingreifen, aus den Vertiefungen 33, 34 gedrückt, so daß eine federnde Komponente entsteht, die bestrebt ist, die Klappen 28, 29 wieder in die stabile Lage (waagerecht oder senkrecht) zu bringen.

Schließlich sind an der Vorderseite des Gehäuses 1 noch Beschriftungsfelder 38 vorgesehen. Insgesamt zeigt sich, daß ein gekapseltes Sicherungselement geschaffen ist, das, insbesondere bei Verwendung der beiden Abdeckklappen, berührungssicher ist, so daß die Gefahr elektrischer Stromschläge weitgehend gebannt ist.

## Patentansprüche

1. Durch ein Gehäuse vollständig gekapseltes dreipoliges Sicherungselement zum direkten Aufsetzen auf
Stromschienensysteme, mit einem federnden Rasthebel (9) zum formschlüssigen Verriegeln des Sicherungselementes mit einer der Stromschienen,
bei dem sämtliche Klemmen der Abgangsleitungen (20) im Bereich der unteren Stirnseite (17) des Gehäuses (1) auf einer Höhe liegen und sowohl im Bereich der oberen Gehäusestirnseite (8) als auch im Bereich der unteren Gehäusestirnseite (17) mehrere Lüftungsschlitze (18, 19) angeordnet sind,
bei dem zur Abdeckung von Klemmschrauben (22) von Abgangsklemmen (21) und/oder einer kanalartigen Vertiefung (13) für einen Lösearm (12) für den Rasthebel (9) verschwenkbare Abdeckklappen (28, 29) angeordnet sind, wobei die Abdeckklappen (28, 29) Schwenkachsen aufweisen, die aus zwei an jeder Abdeckklappe (28, 29) angeordneten, koaxial ausgerichteten Vorsprüngen (31, 32) mit aufeinanderzuweisenden pyramidenförmigen Spitzen bestehen, die in entsprechende pyramidenförmige Vertiefungen (33,34) des Gegenlagers (35) am Gehäuse (1) eingreifen.

2. Sicherungselement nach Anspruch 1, dadurch gekennzeichnet, daß die Abgangsklemmen als Kastenklemmen (21) mit von vorne her zugänglichen Klemmschrauben (22) ausgebildet sind, wobei die Klemmschrauben (22) mit ihren Schraubenköpfen (24) berührungssicher vertieft im Gehäuse (1) angeordnet sind.

3. Sicherungselement nach Anspruch 1 oder 2, dadurch gekennzeichnet, daß der verschwenkbare und federnd in der Verriegelungsstellung gehaltene Rasthebel (9) in der Nähe der oberen Stirnseite (8) des Gehäuses (1) zum formschlüssigen Verrasten mit der oberen Stromsammelschiene angeordnet ist und daß der von außen betätigbare Lösearm (12) in die äußere kanalartige Vertiefung (13) der oberen Stirnseite (8) des Gehäuses (1) hineinragt.

4. Sicherungselement nach Anspruch 1, dadurch gekennzeichnet, daß die Abdecklappen (28, 29) von der geöffneten in die geschlossene Stellung und umgekehrt schnappend und in ihren beiden Endpositionen eine stabile Lage einnehmend gelagert sind.

5. Sicherungselement nach Anspruch 1 oder 3, dadurch gekennzeichnet, daß die Schwenkachse der Abdeckklappen (28, 29) aus zwei an der Abdeckklappe (28, 29) angeordneten, koaxial gerichteten Vorsprüngen (31, 32) mit aufeinanderzuweisenden konischen oder kegelförmigen Spitzen besteht, die in entsprechende kegelförmige Vertiefungen (33, 34) des Gehäuses (1) bzw. der Lagerachse (35) eingreifen, wobei am Gehäuse (1) bzw. deren Lagerachse (35) zwei im rechten Winkel zueinander stehende Abflachungen (36, 37) in waagerechter und senkrechter Ausrichtung angeordnet sind, an denen die Unterkante (30) der Abdeckklappen (28, 29) jeweils in der geschlossenen oder in der geöffneten Position anliegt.

6. Sicherungselement nach einem der Ansprüche 1 bis 5, dadurch gekennzeichnet, daß die obere Abdeckklappe (28) im geschlossenen Zustand etwa um den Betrag des Abschiebewegs des Sicherungselements von den Stromsammelschienen über die obere Gehäusestirnseite (8) hinausragt, während die untere Abdeckklappe (29) im geschlossenen Zustand bündig mit der unteren Gehäusestirnseite (17) abschließt.

7. Sicherungselement nach einem der Ansprüche 1 bis 6, dadurch gekennzeichnet, daß an den Aufsteckfüßen (6) abbrechbare leistenförmige Vorsprünge (7) zur Anpassung an die jeweilige Stromschienendicke angeordnet sind.

## Claims

1. A three-pole fuse element being completely encapsulated by a housing for direct attachment to power supply bar systems comprising
a springy or resilient notch arm (9) for form-fit locking of said fuse element to one of the power supply bars wherein all terminals of the output leads (20) in the region of the lower front side (17) of the housing (1) are placed at one level and several vent holes (18, 19) arranged both in the region of the upper front side (8) of the housing and in the region of the lower front side (17) of the housing as well,
wherein swingable cover flaps (28, 29) are arranged for coverage of terminal screws (22) of output terminals (21) and/or of a channel-like recess (13) for a disengaging arm (12) for said notch arm (9),
wherein said cover flaps (28, 29) have swivel axes consisting of two coaxially aligned projections (31, 32) attached to each cover flap (28, 29), said projections having pyramidal tips directed towards each other, said tips being engaged into corresponding pyramidal recesses (33, 34) of the opposed bearing (35) at the housing (1).

2. The fuse element according to claim 1, characterized in that said output terminals are formed as box terminals (21) having terminal screws (22) which are accessible from the front side, wherein said terminal screws (22) are arranged all insulated in a depression of said housing (1) .

3. The fuse element according to claim 1 or 2, characterized in that
said notch arm (9) held swingable and resilient in the locking position is arranged close to the upper front side (8) of the housing (1) for form-fit locking with the upper power supply bar and that said disengaging arm (12) which is operatable from the outside projects into the outer channel-like recess (13) of the upper front side (8) of the housing (1).

4. The fuse element according to claim 1, characterized in that
said cover flaps (28, 29) are supported to snap from the open to the closed position and vice versa and take a stable position in their end positions.

5. The fuse element according to claim 1 or 3, characterized in that
said swivel axis of said cover flaps (28, 29) consists of two coaxially directed projections (31, 32) having conical or cone-shaped peaks directed toward each other said projections engage into corresponding cone-shaped depressions (33, 34) of said housing (1) or said support axis (35), respectively,
wherein two flattenings (36, 37) standing rectangular to each other are arranged in a horizontal or vertical position at said housing (1) or said support axis (35), respectively, and against which the lower edge (30) of said cover flaps (28, 29) rests in the closed or in the open position.

6. The fuse element according to one of the claims 1 to 5, characterized in that said upper cover flap (28) projects in closed condition approximately with a pushing distance of the fuse element from said power supply bars beyond the upper front side (8) of said housing, while the lower cover flap (29) occludes in the closed condition flush with the lower front side (17) of said housing.

7. The fuse element according to one of the claims 1 to 6, characterized in that striplike breakable projections (7) are arranged on attachment feet (6) for adjustment to the thickness of the respective power supply bar.

## Revendications

1. Elément fusible tripolaire complètement enfermé dans un boîtier pour la pose directe sur un système à rails conducteurs, comprenant un levier à crans (9) élastique pour le verrouillage par complémentarité de forme de l'élément fusible avec un des rails conducteurs, dans lequel la totalité de bornes des circuits de prélèvement (20) sont disposées à un même niveau et plusieurs ouvertures d'aération (18, 19) sont prévues aussi bien dans la région de la face frontale supérieure (8) que dans la région de la face frontale inférieure (17), dans lequel des panneaux de couverture pouvant être pivotés (28, 29) sont prévus pour une couverture des vis de serrage (22) des bornes de prélèvement (21) et/ou d'une cavité en forme de canal (13) pour un bras de libération (12) pour le levier à crans (9), les panneaux de couverture (28, 29) présentant des arbres d'articulation qui sont constitués par des saillies (31, 32) dirigées coaxialement et comprenant des extrémités en forme de pointes dirigées l'une vers l'autre sur chaque panneau de garnitures (28, 29), qui coopèrent avec des cavités (33, 34) en forme de pyramides correspondantes de la butée (35) sur le boîtier (1).

2. Elément fusible selon la revendication 1, caractérisé en ce que les bornes de prélèvement sont réalisées comme des bornes à becs (21) comprenant des vis de serrage (22)accessibles par devant, dans lequel les vis de serrage (22) sont disposées avec leurs têtes de vissage (24) encastrées dans le boîtier protégées contre le contact.

3. Elément fusible selon la revendication 1 ou 2, caractérisé en ce que le levier à crans (9) maintenu de façon à pouvoir être pivoté et à être élastique dans la position de verrouillage est disposé à proximité de la face frontale supérieure (8) du boîtier (1) pour s'enclencher par complémentarité de forme avec le rail supérieur de collection de courant, et en ce que le bras de libération (12) commandable de l'extérieur fait saillie dans la cavité (13) extérieure en forme de canal de la face frontale supérieure (8) du boîtier (1).

4. Elément fusible selon la revendication 1, caractérisé en ce que les panneaux de couverture (28, 29) sont montés de manière à s'encliqueter de leur position ouverte à leur position fermée et inversement et à prendre dans leurs deux positions finales un état stable.

5. Elément fusible selon la revendication 1 ou 3, caractérisé en ce que l'arbre d'articulation des panneaux de couverture (28, 29) est constitué de deux saillies (31, 32) dirigées coaxialement, disposées sur les panneaux de garnitures (28, 29) et comprenant des extrémités en forme de cônes ou coniques en regard l'une de l'autre qui coopèrent avec des cavités (33, 34) en forme de cône du boîtier (1) ou de l'axe support (35), dans lequel, sur le boîtier (31) ou sur l'arbre de support (35) deux aplatissements (36, 37) disposés à angle droit l'un par rapport à l'autre sont réalisés l'un vertical et l'autre horizontal, le bord inférieur (30) des panneaux de couverture (28, 29) s'appuyant respectivement sur ceux-ci en position fermée ou ouverte.

6. Elément fusible selon l'une quelconque des revendications 1 à 5, caractérisé en ce que le panneau de couverture supérieur (2) fait saillie depuis la face frontale supérieure du boîtier (8), dans son état fermé, d'environ la course de libération entre l'élément fusible et le rail d'amenée du courant, alors que le panneau de couverture inférieur (29), dans son état fermé, et la face frontale inférieure du boîtier se terminent bord à bord.

7. Elément fusible selon l'une quelconque des revendications 1 à 6, caractérisé en ce que des saillies (7) en forme de barrettes à rompre sont prévues sur des pattes d'accrochage (6) pour l'ajustement à des épaisseurs respectives du rail conducteur.
